# EUROPÄISCHE PATENTSCHRIFT

(11) **EP 0 668 970 B1**
(45) Veröffentlichungstag und Bekanntmachung des Hinweises auf die Patenterteilung: **11.09.1996**
(21) Anmeldenummer: 93923539.6
(22) Anmeldetag: 23.10.1993
(51) Int. Cl.: F16D 25/0638

(54) **DRUCKMITTELBETÄTIGTE REIBSCHEIBENKUPPLUNG**
HYDRAULICALLY ACTUATED FRICTION DISK CLUTCH
EMBRAYAGE A DISQUES DE FRICTION, A COMMANDE HYDRAULIQUE

(30) Priorität: 03.11.1992 DE 4237075
(43) Veröffentlichungstag der Anmeldung: 30.08.1995
(73) Patentinhaber: DEERE & COMPANY, Moline, Illinois 61265 (US)
(72) Erfinder: HERING, Hubert, D-67281 Kirchheim (DE)
(74) Vertreter: Feldmann, Bernhard
(86) Internationale Anmeldenummer: EP9302936
(87) Internationale Veröffentlichungsnummer: WO9410471

(56) Entgegenhaltungen:
- EP-A- 0 519 387
- FR-A- 2 138 940
- FR-A- 2 633 024
- GB-A- 1 025 591
- US-A- 3 047 115

## Beschreibung

Die Erfindung betrifft eine druckmittelbetätigte Reibscheibenkupplung für Fahrzeuge gemäß dem Oberbegriff des Patentanspruches 1.

Bei landwirtschaftlichen und industriellen Fahrzeugen, wie Ackerschlepper und dergleichen, finden für die Zuschaltung des Vorderradantriebes druckmittelbetätigte Reibscheibenkupplungen Anwendung. Diese Kupplungen werden gewöhnlich durch Drucköl gesteuert. Aus Sicherheitsgründen ist das Kupplungsscheibenpaket durch eine Federanordnung belastet, so daß im drucklosen Zustand die Kupplung eingeschaltet (eingerückt) ist. Wird jedoch eine Kolbenkammer der Kupplung mit Drucköl beaufschlagt, so drückt der Kolben die Federanordnung zusammen, wodurch die die Oberflächen der Kupplungsscheiben aufeinander pressende Belastung und damit auch die Kupplungswirkung aufgehoben wird.

Derartige Kupplungen enthalten gewöhnlich neben den Kupplungsscheiben Druckplatten, die das Kupplungsscheibenpaket beidseits abdecken, Übertragungsmittel zur Übertragung der Kolbenkraft auf die Federanordnung und weitere Hilfsmittel. Eine Druckplatte stützt das Kupplungsscheibenpaket an der Kupplungstrommel ab, während an der anderen Druckscheibe die Federanordnung angreift.

Aus der US-A-3,047,115 geht eine druckmittelbetätigbare Kupplung der eingangs genannten Art hervor. Um einen in Umfangsrichtung der Kupplungsscheiben gleichmäßigen Kupplungsdruck zu gewährleisten wird die Verwendung eines Kraftpakets vorgeschlagen. Dieses läßt sich als ein Bauteil von dem Kupplungsgehäuse entfernen. Dadurch soll bei Reparaturen ein schneller Zugang zu den Kupplungsscheiben möglich sein. Das Kraftpaket besteht im wesentlichen aus einem eine stirnseitige Öffnung des Kupplungsgehäuses verschließenden kappenförmigen Zylinder und einem darin angeordneten Kolben. Zwischen Zylinder und Kolben ist eine mit einer Druckquelle verbundene Kammer derart ausgebildet, daß sich bei Druckbeaufschlagung der Kolben innerhalb des Zylinders axial verschiebt. Ferner ist zwischen Zylinder und Kolben eine Rückstellfeder angeordnet, die den Kolben gegen die Druckkraft in seine Ausgangsstellung drückt. Das Kraftpaket läßt sich in die stirnseitige Öffnung des Kupplungsgehäuses einsetzen und durch einen Sicherungsring sichern.

Die der Erfindung zugrunde liegende Aufgabe wird darin gesehen, eine Reibscheibenkupplung der eingangs genannten Art anzugeben, die kompakt und platzsparend ausgebildet ist, aus möglichst wenigen Einzelteilen besteht und sich rasch und einfach montieren läßt.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Vorzugsweise handelt es sich um eine solche Reibscheibenkupplung, die durch die Federkraft geschlossen und durch Druckmitteldruck geöffnet wird, wobei der die Kupplungsscheiben beinhaltende Raum als im wesentlichen abgedichteter Raum ausgebildet ist, in den das Druckmittel zum Lösen der Kupplung eingebracht wird. Zwischen der Welle und der Kupplungsglocke ist ein Kolben axial verschiebbar angeordnet, den eine Federanordnung gegen die Kupplungsscheiben drückt, um eine Drehmomentübertragung zu gewährleistn. Die Welle ist im Bereich der als vormontierbare Baueinheit ausgebildeten Kupplungseinheit zu einer Seite hin progressiv gestuft und eignet sich somit als Steckverbindung.

Vorzugsweise ist das Eingangszahnrad an die Kupplungsglocke, die aus einem Guß- oder Schmiedeteil bestehen kann, angeformt. Durch diese einteilige Ausbildung werden die auf die Verzahnung einwirkenden Kräfte unmittelbar über den Kupplungskorb, den Kolben und die Kupplungsscheiben auf die Welle geleitet.

Die Kupplungseinheit ist doppelschnittig gelagert, wobei sich eine Lagerung an der Kupplungsglocke in etwa unter dem Eingangszahnrad und die andere Lagerung an dem Kolben befindet

Eine bevorzugte Ausgestaltung der Erfindung sieht vor, daß die Kupplungsscheiben unmittelbar zwischen einer radial ausgerichteten Fläche des die Kammer begrenzenden Gehäuses und einer radial ausgerichteten Fläche eines federbelasteten, axial zum Gehäuse verschiebbaren Kolbens angeordnet sind, wobei auf der außerhalb der Kammer liegenden Seite des Kolbens wenigstens eine Druckfeder, vorzugsweise eine sich am Gehäuse abstützende Tellerfeder, angreift. Durch eine derartige Lösung sind Druckplatten und Hilfsmittel entbehrlich. Somit können Teile eingespart werden, wodurch sich eine kostengünstige Konstruktion ergibt.

Die erfindungsgemäße Reibscheibenkupplung besteht aus einer minimalen Anzahl von Bauteilen und ist aufgrund dessen sehr kostengünstig zu fertigen. Alle kupplungsrelevanten Teile werden in die Kupplungsglocke eingesetzt und durch ein Tellerfederpaket vorgespannt. Dann wird die Welle, die zweckmäßigerweise die Abtriebswelle ist und als ungeteilte Welle ausgebildet sein kann, in die vormontierte Baueinheit eingesteckt und ist vorzugsweise durch zwei Lagerungen axial fixiert. Hierdurch wird eine zeitoptimierte Montage gewährleistet. Ferner ist eine weitgehende Vormontage möglich.

Die erfindungsgemäße Reibscheibenkupplung baut im Vergleich zu bekannten Kupplungen sehr kompakt und platzsparend. Die Kühlung ist im eingeschalteten Zustand ohne zusätzliche Bauteile möglich.

Vorzugsweise ist der Kolben drehfest mit der Kupplungsglocke verbunden. Hierfür kann wenigstens ein sich axial erstreckender Paßstift vorgesehen sein, der mit seinem einen Ende in eine stirnseitige Bohrung der Kupplungsglocke und mit seinem anderen Ende in eine gegenüberliegende stirnseitige Bohrung des Kolbens eingreift.

Ferner ist es von Vorteil, das Druckmedium über eine axiale Bohrung und wenigstens eine die Kammer mit der axialen Bohrung verbindende Zulaufbohrung der Kammer zu führen, wobei der Druck sich über ein außerhalb der Reibscheibenkupplung liegendes Steuerventil einstellen läßt.

Zweckmäßigerweise sind mehrere über die axiale Erstreckung des Kupplungsscheibenpaketes verteilte Zulaufbohrungen vorgesehen, so daß das Druckmedium sich rasch in der Kammer ausbreiten und gleichzeitig zwischen die Kupplungsscheiben treten kann, so daß die Scheiben sich leichter voneinander lösen.

Zu diesem Zweck können auch in den Kupplungsscheiben axial ausgerichtete Bohrungen vorgesehen sein. Solche Bohrungen befinden sich vorzugsweise in den mit der Welle in Verbindung stehenden Innenscheiben und zwar in dem Bereich, der radial außerhalb der Verzahnung zwischen den Kupplungsbelagflächen und der Welle liegt.

Um einen Eintritt des Druckmediums zwischen die Platten zu erleichtern, ist es ferner von Vorteil, die Oberfläche der Kupplungsscheiben mit Nuten zu versehen, die im wesentlichen radial ausgerichtet und relativ schmal sind, um nicht zu viel Belagfläche zu beanspruchen. Hierdurch kann sich das Druckmedium (Flüssigkeit, z. B. Drucköl) an den Reibflächen und Anlageflächen der Kupplungsscheiben ausbreiten, so daß dann, wenn ein bestimmter Druck in der Kupplungsscheibenkammer erreicht ist und der Kolben gegen die Federanordnung verschoben wird, sich die Kupplungsscheiben voneinander lösen und die Drehmomentenübertragung unterbrochen wird.

Vorzugsweise handelt es sich bei den Kupplungsscheiben um ein Lamellenpaket, das zwischen einer radial ausgerichteten Fläche des die Kammer begrenzenden Gehäuses und einer radial ausgerichteten Fläche des Kolbens angeordnet ist. Der Kolben wirkt somit gleichzeitig als Kupplungsdruckplatte. Gesonderte Kupplungsdruckplatten sind nicht erforderlich.

Um zu vermeiden, daß zwischen Kupplungsgehäuse und Kupplungswelle aufgrund der Druckbelastung in der Kammer Axialkräfte resultieren, werden die hinsichtlich des Druckmediums wirksamen Flächen des Kolbens und des Gehäuses vorzugsweise in etwa gleich groß ausgebildet.

Eine hohe Belastung der Kupplung eines Fahrzeugantriebes kann dazu führen, daß die Kupplungsscheiben gegeneinander rutschen, auch wenn die Kupplung eingerückt ist. Dies birgt die Gefahr in sich, daß sich die Kupplungsscheiben infolge Reibungswärme schon nach kurzer Zeit so stark erwärmen, daß sie beschädigt werden.

Um eine optimale Kühlung der Kupplungsscheiben bei eingerückter Kupplung zu ermöglichen, schlägt eine bevorzugte Ausgestaltung der Erfindung vor, einen radial außen liegenden Bereich der Kammer über eine Ventilanordnung mit einem Druckmittel sammelbehälter zu verbinden. Die Verbindungsöffnung befindet sich zweckmäßigerweise im oberen Bereich der Kammer, um ein Durchströmen der Belagflächen mit dem Kühlmedium zu gewährleisten.

Vorzugsweise ist die Ventilanordnung so ausgelegt und angeordnet, daß sie durch den in der Kammer herrschenden Druckmitteldruck gesteuert wird.

Um bei offener Kupplung einen unnötigen Kühldurchfluß durch die Kupplung zu vermeiden, ist es zweckmäßig, wenn die Ventilanordnung eine Verbindung zwischen der Kammer und dem Druckmittelsammelbehälter verschließt, sofern die Kupplungsscheiben infolge des in der Kammer herrschenden Druckes voneinander gelöst sind.

Der Querschnitt der Verbindung zwischen Kammer und Sammelbehälter wird so gewählt, daß er auch bei einer relativ geringen Druckdifferenz zwischen abgedichteter Kammer und Druckmittelsammelbehälter einen ausreichenden Kühlstromdurchtritt gewährleistet. Der Kühlmitteldurchtritt kann durch einen geringen Überdruck in der Kammer oder durch Fliehkräfte bewirkt werden.

Vorzugsweise enthält der Verbindungskanal zwischen dem radial außen liegenden Bereich der Kammer und dem Drucksammelbehälter wenigstens eine Blende, die bei geöffneter Ventilanordnung den durchtretenden Volumenstrom unabhängig von Änderungen der temperaturabhängigen Viskosität des Druckmittels weitgehend konstant hält.

Eine einfache, kostengünstig herstellbare Ventilanordnung ergibt sich dadurch, daß der Kolben in seinem oberen Bereich wenigstens einen von der Kammer aus nach außen führenden Kanal aufweist, der bei einer Verschiebung des Kolbens gegen die Federkraft selbsttätig verschließbar ist.

Es ist von Vorteil, in der Kupplungsglocke eine im wesentlichen radiale Öffnung vorzusehen, die mit dem Kanal des Kolbens eine Verbindung zwischen Kammer und Sammelbehälter bildet und bei einer Verschiebung des Kolbens gegen die Federkraft selbsttätig verschlossen wird.

Aufgrund der erforderlichen weitgehenden Abdichtung der Kammer ist der Kühlölstrom begrenzt. Daher wird die erfindungsgemäße Reibscheibenkupplung vorzugsweise dort eingesetzt, wo relativ geringe Reibleistungen übertragen werden, oder wo geringe Relativdrehzahlen im ausgekuppelten Zustand zwischen den zu verbindenden Wellen auftreten. Dies ist beispielsweise bei Zwischendifferentialen von Kraftwagen sowie bei Vorderachskupplungen und Differentialsperrkupplungen der Fall.

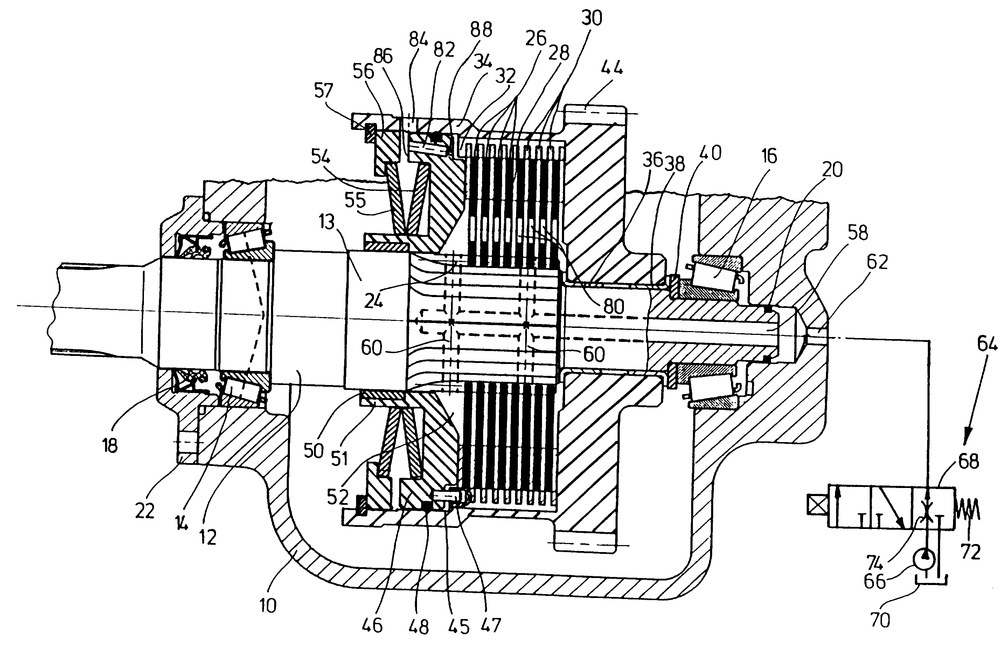

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt eine erfindungsgemäße Reibscheibenkupplung im Querschnitt. In einem Kupplungsgehäuse 10 ist eine Welle 12 mittels zweier Kegelrollenlager 14, 16 gelagert. Das Kupplungsgehäuse 10 dient auch als Sammelbehälter, in dem sich Druck- bzw. Kühlöl sammelt. Die Wellenenden sind durch Dichtungen 18, 20 gegenüber dem Kupplungsgehäuse 10 bzw. einem Lagerdeckel 22 abgedichtet.

Die Welle 12 hat in ihrem mittleren Bereich 13 den größten Querschnitt. Gemäß der Figur rechts neben diesem mittleren Bereich 13 trägt die Welle 12 eine Verzahnung 24, die mit den Innenlamellen 26 eines Lamellenpaketes 28 in Eingriff stehen. Die Außenlamellen 30 des Lamellenpaketes 28 greifen in eine Verzahnung 32 einer Kupplungsglocke 34 ein.

Die Kupplungsglocke 34, die als Gehäuse für das Lamellenpaket 28 dient, ist über Gleitlagerbuchsen 36, 38 auf der Welle 12 drehbar gelagert und durch eine Anlaufscheibe 40 zur Aufnahme axialer Kräfte gesichert. An der Kupplungsglocke 34 ist ein Antriebszahnrad 44 angeformt, welches mit einem Ausgangszahnrad eines nicht dargestellten Fahrzeuggetriebes in Eingriff steht. Die Wellenlagerung der Kupplungsglocke 34 liegt in etwa auf der gleichen axialen Höhe wie das Antriebszahnrad 44.

In einer zylinderförmigen Ausnehmung 45 der Kupplungsglocke 34 ist ein Kolben 46 axial verschiebbar, jedoch gegenüber der Kupplungsglocke 34 drehfest angeordnet. Der Drehsicherung dient ein axial ausgerichteter Paßstift 47, der mit seinem einen Ende in eine stirnseitige Bohrung des Kolbens 46 durch eine Preßpassung eingepaßt ist und mit seinem anderen Ende in eine gegenüberliegende stirnseitige Bohrung der Kupplungsglocke 34 gleitend eingreift, so daß er eine axiale Relativverschiebung des Kolbens 46 zur Kupplungsglocke 34 zuläßt.

Der Kolben 46 ist über eine Bronzebuchse 50 drehbar und axial verschiebbar auf der Welle 12 gelagert. Die Bronzebuchse 50, die auch eine Dichtfunktion übernimmt, ist in eine Ausdrehung in einem sich nach außen erstreckenden, an den Kolben 46 angeformten zylinderförmigen Ansatz 51 eingepaßt. Durch die relativ große axiale Länge des Ansatzes 51 läßt sich ein Verkanten des Kolbens 46 gegenüber der Welle 12 vermeiden. An Stelle der Bronzebuchse 50 kann zur Lagerung auch ein Nadellager mit zusätzlicher Dichtung vorgesehen sein.

Der Kolben 46 ist durch einen O-Ring 48 gegenüber der Kupplungsglocke 34 abgedichtet. Zur Abdichtung zwischen Welle 12 und Kolben 46 und Kupplungsglocke 34 können nicht dargestellte Dichtungen vorgesehen sein. Dabei kann es sich beispielsweise um Ringe handeln, die in entsprechenden Nuten in der Welle 12 eingelegt sind. Diese Ringe sind sowohl auf Drehbewegungen als auch auf axiale Verschiebungen ausgelegt.

Auf der Seite des Ansatzes 51 weist der Kolben 46 eine Ausdrehung auf, in die eine erste Tellerfeder 54 eingesetzt ist, die sich mit ihrem äußeren Rand an dem Kolben 46 abstützt. Eine zweite Tellerfeder 55 liegt mit ihrem inneren Durchmesser an der ersten Tellerfeder 54 an und stützt sich mit ihrem äußerer Rand an einem Distanzring 56 ab, der seinerseits durch einen in eine Nut der Kupplungsglocke 34 eingelassenen Sicherungsring 57 gegen eine axiale Verschiebung gesichert ist. Durch die Tellerfedern 54, 55 wird der Kolben 46 in Richtung Lamellenpaket 28 verschoben und drückt dieses zusammen. Mit zusammengedrücktem Lamellenpaket 28 ist die Kupplung eingerückt und überträgt ein Drehmoment von dem Antriebszahnrad 44 über die Kupplungsglocke 34 auf die Welle 12. Die Vorspannung der Tellerfedern 54, 55 ist so gewählt, daß ein vorgebbares Drehmoment übertragen wird, ohne daß die Lamellen 26, 30 gegeneinander schleifen.

Der Distanzring 56 dient neben der Aufnahme der zweiten Tellerfeder 55 auch als Anschlag, der lediglich eine begrenzte axiale Bewegung des Kolbens 46 zuläßt, sowie als Ventilmittel, wie noch beschrieben werden wird.

Das Lamellenpaket 28, der Kolben 46 und die aus den Tellerfedern 54, 55 und dem Distanzring 56 bestehende Federanordnung sind vollständig innerhalb der Kupplungsglocke 34 angeordnet und bilden mit dieser eine vormontierbare, auf die Welle 12 aufsteckbare Baueinheit. Zur Vormontage wird die Gleitbuchse 36 in eine axiale Bohrung der Kupplungsglocke 34 eingesetzt. Hierauf werden die Außenlamellen 30 und die Innenlamellen 26 abwechselnd in die Kammer 52 der Kupplungsglocke 34 eingeschichtet. Dann werden der Kolben 46 mit montiertem O-Ring 48, Bronzebuchse 50 und Paßstift 47 sowie die beiden Tellerfedern 54, 55 und der Distanzring 56 in die zylinderförmige Ausnehmung 45 eingefügt. Schließlich wird das Gesamtpaket zusammengedrückt und der Sicherungsring 57 in eine Nut in der Kupplungsglocke 34 eingesetzt, der den Distanzring 56 an einer axialen Verschiebung nach außen hindert.

Die Welle 12 ist von ihrem mittleren Bereich 13 aus zu beiden Seiten hin mit abnehmenden Querschnitten gestuft ausgebildet. Da die Welle 12 im Bereich der Kupplungsglocke 34 zu ihrem (rechten) freien Ende hin progressiv gestuft ausgebildet ist, kann zur weiteren Montage der Reibscheibenkupplung die vormontierte Baueinheit der Kupplungsglocke 34 auf das gemäß der Figur rechte Ende der Welle 12 aufgesteckt werden, so daß sie die in der Figur dargestellte Lage einnimmt und die Bronzebuchse 50 über dem mittleren Bereich 13 der Welle 12 gleitend angeordnet ist.

Nach dem Aufsetzen der Anlaufscheibe 40, des Kegelrollenlagers 16 und der Dichtung 20 auf das gemäß der Figur rechte Wellenende wird das linke Wellenende durch eine hierfür vorgesehene Öffnung im Kupplungsgehäuse 10 gesteckt. Die Welle 12 wird nach rechts verschoben, so daß sich ihr rechtes Ende über das Kegelrollenlager 16 am Kupplungsgehäuse 10 abstützt. Schließlich werden am linken Wellenende das Kegelrollenlager 14, die Dichtung 18 und der Lagerdeckel 22 montiert.

Die Kupplungsglocke 34, die Welle 12 und der Kolben 46 schließen eine im wesentlichen abgedichtete Kammer 52 ein, in der sich das Lamellenpaket 28 befindet. Das Lamellenpaket 28 liegt mit seiner einen Seite an einem ringförmigen Vorsprung der Kupplungsglocke 34 und mit seiner anderen Seite an einem ringförmigen Vorsprung des Kolbens 46 an. Gesonderte Druckplatten sind nicht vorgesehen.

Die Welle 12 weist eine axiale Bohrung 58 sowie radial verlaufende Zulaufbohrungen 60 auf. Die Zulaufbohrungen 60, von denen lediglich zwei dargestellt sind, verbinden die axiale Bohrung 58 mit der Kammer 52. Die axiale Bohrung 58 steht über eine Gehäusebohrung 62 mit einem Hydraulikversorgungssystem 64 in Verbindung. Letzteres besteht im wesentlichen aus einer Hydraulikpumpe 66, einem Ventil 68 und einem Sammelbehälter 70. Die Pumpe 66 liefert den Systemdruck von beispielsweise 12 bar. Das Ventil 68 ist ein elektromagnetisches Dreiwege-Steuerventil mit drei Stellungen, welches durch ein elektrisches Steuersignal gegen die Kraft einer Feder 72 aus seiner dargestellten ersten Stellung verschiebbar ist. Der Grad der Verschiebung ist von der Größe des elektrischen Steuersignals abhängig.

In der ersten, dargestellten Stellung verbindet das Ventil 68 den Ausgang der Hydraulikpumpe 70 mit der Kammer 52. In dieser Stellung enthält das Ventil 68 jedoch eine Drosselstelle 74, so daß der Systemdruck der Pumpe 66 auf beispielsweise 1 bis 2 bar abgesenkt wird. Dieser Druck reicht nicht aus, um den Kolben 46 gegen die Kraft der Tellerfedern 54, 55 nach außen zu bewegen, die Lamellen 26, 30 voneinander zu lösen und die Kupplung auszurücken. Er dient jedoch der Kühlung des Lamellenpakets 28, wie noch beschrieben werden wird.

In einer zweiten, mittleren Stellung des Ventils 68 wird die Kammer 52 mit dem Sammelbehälter 70 verbunden, so daß die Kammer 52 druckentlastet wird und die Kupplung auch in dieser Stellung eingeschaltet ist.

In einer dritten Stellung verbindet das Ventil 68 den Ausgang der Hydraulikpumpe 70 mit der Kammer 52 ohne Zwischenschaltung einer nennenswerten Drosselstelle. Der Druck in der Kammer 52 steigt auf den Systemdruck an und führt dazu, daß sich der Kolben 46 gegen die Kraft der Tellerfedern 54, 55 nach außen bewegt, so daß die das Lammellenpaket 28 zusammenpressende Kraft der Kraft der Tellerfedern 54, 55 entgegenwirkt und sich die Lamellen 26, 30 gegeneinander verdrehen können. Die Kupplung wird somit in dieser dritten Ventilstellung ausgerückt und überträgt kein Drehmoment.

Um einen guten Druckausgleich in der Kammer 52 zu gewährleisten, weisen die Innenlamellen 26 in ihrem radial inneren Bereich Querbohrungen 80 auf. Ferner sind auf den die Kupplungsbeläge tragenden Flächen der Kupplungslamellen 26, 30 in etwa radial verlaufende Nuten eingebracht, durch die Flüssigkeit zwischen die Lamellen 26, 30 treten kann, so daß ein Druckausgleich zwischen den Lamellen 26, 30 eintritt. Ferner ermöglichen die Nuten einen Flüssigkeitsdurchtritt von radial innen nach außen, um auch bei eingerückter Kupplung einen Kühlflüssigkeitsstrom aufrecht zu erhalten.

Der Kolben 46 weist in seinem oberen Bereich, der außerhalb der radialen Erstreckung der Innenlamellen 26 liegt, einen im wesentlichen axial ausgerichteten Kanal 82 auf. Der Mantelbereich der Kupplungsglocke 34 enthält in seinem oberen Bereich eine radiale Durchbrechung 84. Durch den Kanal 82 und die Durchbrechung 84 besteht eine Verbindung zwischen der Kammer 52 und dem Äußeren der Kupplungsglocke 34, das als Sammelbehälter dient. Durch diese Verbindung kann ein Kühlflüssigkeitsstrom aufrecht erhalten werden.

Bei einer Verschiebung des Kolbens 46 aus der Kammer 52 nach außen (gemäß der Figur nach links) wird die Durchbrechung 84 durch die äußere Mantelfläche des Kolbens 46 verschlossen. Ferner wird, sobald der Kolben 46 mit seiner äußeren Ringfläche 86 gegen den Distanzring 56 aufläuft, die Öffnung des Kanals 82 verschlossen. Damit wirken die Durchbrechung 84 mit der Mantelfläche des Kolbens 46 einerseits und der Kanal 82 mit dem Distanzring 56 andererseits als Ventilanordnungen, die in Abhängigkeit von der axialen Stellung des Kolbens 46 die Verbindung zwischen der Kammer 52 und dem Sammelbehälter öffnen oder verschließen.

Die Achse des als Durchgangsbohrung ausgebildeten Kanals 82 ist hinsichtlich der Kupplungsdrehachse leicht gekippt, so daß ihre hinsichtlich der Kammer 52 äußere Öffnung radial etwas weiter außen liegt, als ihre innere Öffnung. Diese Schrägausrichtung erleichtert bei sich drehender Kupplungsglocke 34 infolge von Fliehkräften das Ausströmen der Kühlflüssigkeit, so daß ein Kühlflüssigkeitsstrom auch dann aufrecht erhalten werden kann, wenn in der Kammer 52 kein Überdruck durch das Hydraulikversorgungssystem 64 aufgebaut wird.

Der Kanal 82 enthält eine Drosselstelle 88, durch deren Bemessung ein konstanter, von der Viskosität des Kühlmediums unabhängiger Volumenstrom einstellbar ist.

## Patentansprüche

1. Druckmittelbetätigte Reibscheibenkupplung für Fahrzeuge, insbesondere eine für die Zuschaltung einer zusätzlichen Achse in den Antriebsstrang vorgesehene Kupplung eines landwirtschaftlichen oder industriellen Fahrzeuges, mit einer Kupplungsglocke (34), innerhalb der Außenkupplungsscheiben (30) drehfest angeordnet sind und die auf einer mit Innenkupplungsscheiben (26) verzahnten Welle (12) drehbar gelagert ist, und mit einem mittels eines Druckmittels gegen die Kraft einer Federanordnung (54, 55) axial verschiebbaren Kolbens (46), der auf das aus den Innenkupplungsscheiben (26) und den Außenkupplungsscheiben (30) bestehende Kupplungspaket (28) einwirkt, dadurch gekennzeichnet, daß das Kupplungspaket (28), der Kolben (46) und die Federanordnung (54, 55) innerhalb der Kupplungsglocke (34) angeordnet sind und mit dieser eine vormontierbare, auf die Welle (12) aufsteckbare Baueinheit bilden, daß die Kupplungsglocke (34) mit dem Kolben (46) und der Welle (12) eine das Kupplungspaket (28) aufnehmende, mit einer Druckmittelquelle (66) verbindbare, im wesentlichen abgedichtete Kammer (52) einschließt und daß die Welle (12) wenigstens im Bereich der Kupplungsglocke (34) zu einer Seite hin progressiv gestuft ausgebildet ist.

2. Reibscheibenkupplung nach Anspruch 1, dadurch gekennzeichnet, daß der Kolben (46) durch die sich an der Kupplungsglocke (34) abstützende Federanordnung (54, 55) gegen das Kupplungspaket (28) gedrückt wird, um die Drehmomentübertragung zu gewährleisten.

3. Reibscheibenkupplung nach Anspruch 1 oder 2, dadurch gekennzeichnet, daß das Kupplungspaket (28) durch die Kraft der Federanordnung (54, 55) zusammengedrückt und durch den Druckmitteldruck gelöst wird.

4. Reibscheibenkupplung nach einem der Ansprüche 1 bis 3, dadurch gekennzeichnet, daß das Kupplungspaket (28) unmittelbar zwischen einer radial ausgerichteten Fläche der die Kammer (52) begrenzenden Kupplungsglocke (34) und einer radial ausgerichteten Fläche des axial zur Kupplungsglocke (34) verschiebbaren Kolbens (46) angeordnet ist.

5. Reibscheibenkupplung nach einem der Ansprüche 1 bis 4, dadurch gekennzeichnet, daß die Federanordnung wenigstens eine Tellerfeder (54, 55) enthält, die sich einerseits an der außerhalb der Kammer (52) liegenden Seite des Kolbens (46) und andererseits an einem durch die Kupplungsglocke (34) abgestützten Haltering (56) abstützt.

6. Reibscheibenkupplung nach einem der Ansprüche 1 bis 5, dadurch gekennzeichnet, daß an der Kupplungsglocke (34) ein Zahnrad (44) angeformt ist, daß dem An- bzw. Abtrieb dient.

7. Reibscheibenkupplung nach einem der Ansprüche 1 bis 6, dadurch gekennzeichnet, daß die Kupplungsglocke (34) und der Kolben (46) sich über je wenigstens eine Lagerung (36, 38; 50) auf der Welle (12) abstützen.

8. Reibscheibenkupplung nach Anspruch 7, dadurch gekennzeichnet, daß die Wellenlagerung (36, 38) der Kupplungsglocke (34) auf der gleichen axialen Höhe liegt, wie das Zahnrad (44).

9. Reibscheibenkupplung nach einem der Ansprüche 1 bis 8, dadurch gekennzeichnet, daß der Kolben (46) drehfest mit der Kupplungsglocke (34) verbunden ist.

10. Reibscheibenkupplung nach Anspruch 9, dadurch gekennzeichnet, daß wenigstens ein sich axial erstreckender Paßstift (47) vorgesehen ist, der mit seinem einen Ende in eine stirnseitige Bohrung der Kupplungsglocke (34) und mit seinem anderen Ende in eine gegenüberliegende stirnseitige Bohrung des Kolbens (46) eingreift.

11. Reibscheibenkupplung nach einem der Ansprüche 1 bis 10, dadurch gekennzeichnet, daß die Welle (12) wenigstens eine axiale Bohrung (58) und wenigstens eine die Kammer (52) mit der axialen Bohrung (58) verbindende Zulaufbohrung (60) zur Zufuhr des Druckmediums aufweist.

12. Reibscheibenkupplung nach einem der Ansprüche 1 bis 11, dadurch gekennzeichnet, daß die Kupplungsscheiben (26, 30) axial ausgerichtete Durchbrechungen (80) und/oder im wesentlichen radiale Nuten auf ihrer Belagsoberfläche aufweisen.

13. Reibscheibenkupplung nach einem der Ansprüche 1 bis 12, dadurch gekennzeichnet, daß ein radial außen liegender Bereich der Kammer (52) über eine Ventilanordnung mit einem Druckmittelsammelbehälter verbindbar ist.

14. Reibscheibenkupplung nach Anspruch 13, dadurch gekennzeichnet, daß die Ventilanordnung so ausgelegt und angeordnet ist, daß sie durch den in der Kammer (52) herrschenden Druckmitteldruck gesteuert wird.

15. Reibscheibenkupplung nach Anspruch 13 oder 14, dadurch gekennzeichnet, daß die Ventilanordnung eine Verbindung zwischen der Kammer (52) und dem Druckmittelsammelbehälter verschließt, sofern die Kupplungsscheiben (26, 30) infolge des in der Kammer (52) herrschenden Druckes voneinander gelöst sind.

16. Reibscheibenkupplung nach einem der Ansprüche 13 bis 15, dadurch gekennzeichnet, daß ein Verbindungskanal (82) zwischen dem radial außen liegenden Bereich der Kammer (52) und dem Druckmittelsammelbehälter wenigstens eine Blende (88) enthält, die bei geöffneter Ventilanordnung den durchtretenden Volumenstrom weitgehend konstant hält.

17. Reibscheibenkupplung nach einem der Ansprüche 13 bis 16, dadurch gekennzeichnet, daß der Kolben (46) wenigstens einen von der Kammer (52) aus nach außen führenden Kanal (82) aufweist, der sich bei einer Verschiebung des Kolbens (46) gegen die Kraft der Federanordnung (54, 55) selbsttätig verschließt.

18. Reibscheibenkupplung nach einem der Ansprüche 13 bis 17, dadurch gekennzeichnet, daß die Kupplungsglocke (34) eine im wesentlichen radiale Öffnung (84) aufweist, die mit einem Kanal (82) im Kolben (46) eine Verbindung zwischen der Kammer (52) und einem Druckmittelsammelbehälter bildet und bei einer Verschiebung des Kolbens (46) gegen die Kraft der Federanordnung (54, 55) sich selbsttätig verschließt.

## Claims

1. Fluid pressure-actuated frictional disk clutch for vehicles, in particular a clutch for shifting an additional axle into the drive line of an agricultural or industrial vehicle, with a clutch bell housing (34) within which the outer clutch disks (30) are arranged, fixed against rotation, which is supported in bearing, free to rotate, on a shaft (12) that meshes with a set of gear teeth with inner clutch disks (26) and with a piston (46) that can be moved axially by a pressurised fluid against the force of a spring arrangement (54, 55) and that applies force to the clutch disk package (28) consisting of the inner clutch disks (26) and the outer clutch disks (30), characterised in that the clutch disk package (28), the piston (46) and the spring arrangement (54, 55) are arranged within the clutch bell housing (34), and in that these together compose a subassembly that can be pre-assembled and slid on to the shaft (12), in that the clutch bell housing (34) with the piston (46) and the shaft (12) comprise a generally sealed chamber (52) that encloses the clutch disk package (28) and that can be connected to a source of fluid pressure (66), and in that the shaft (12) is configured with progressive steps at least to one side in the region of the clutch bell housing (34).

2. Frictional disk clutch according to claim 1, characterised in that the piston (46) is forced against the clutch disk package (28) by the spring arrangement (54, 55) which is supported on the clutch bell housing (34), in order to ensure the transmission of torque.

3. Frictional disk clutch according to claim 1 or 2, characterised in that the clutch disk package (28) is compressed by the force of the spring arrangement (54, 55) and is released by the pressure of the pressurised fluid.

4. Frictional disk clutch according to one of claims 1 to 3, characterised in that the clutch disk package (28) is arranged directly between a radial surface of the clutch bell housing (34) which borders the chamber (52) and a radial surface of the piston (46) that can be shifted axially towards the clutch bell housing (34).

5. Frictional disk clutch according to one of claims 1 to 4, characterised in that the spring arrangement contains at least one Belleville spring (54, 55) which is supported on the one hand on the side of the piston (46) that is located outside the chamber (52) and on the other hand on a retaining ring (56) which is supported on the clutch bell housing (34).

6. Frictional disk clutch according to one of claims 1 to 5, characterised in that the clutch bell housing (34) 25 to which a gear (44) is moulded is used as drive input or drive output gear.

7. Frictional disk clutch according to one of claims 1 to 6, characterised in that the clutch bell housing (34) 30 and the piston (46) are each supported on the shaft (12) by at least one bearing arrangement (36, 38; 50).

8. Frictional disk clutch according to claim 7, characterised in that the shaft bearing arrangement (36, 38) of the clutch bell housing (34) is located at the same axial position as the gear (44).

9. Frictional disk clutch according to one of claims 1 to 8, characterised in that the piston (46) is connected to the clutch bell housing (34), fixed against rotation.

10. Frictional disk clutch according to claim 9, characterised in that at least one alignment pin (47) is provided, that extends axially and that engages with one end a bore in the end face of the clutch bell housing (34) and with the other end an opposite bore in the end face of the piston (46).

11. Frictional disk clutch according to one of claims 1 to 10, characterised in that the shaft (12) is provided with at least one axial bore (58) and at least one supply bore (60) which connects the chamber (52) with the axial bore (58) for the supply of the pressurised fluid.

12. Frictional disk clutch according to one of claims 1 to 11, characterised in that the clutch disks (26, 30) are provided with axial penetrations (80) and/or generally radial grooves on the surface of their linings.

13. Frictional disk clutch according to one of claims 1 to 12, characterised by the fact that a radially outward region of the chamber (52) can be connected to a reservoir for pressurised fluid through a valve arrangement.

14. Frictional disk clutch according to claim 13, characterised in that the valve arrangement is designed and arranged in such a way that it is controlled by the 5 pressure of the pressurised fluid existing in the chamber (52).

15. Frictional disk clutch according to claim 13 or 14, characterised in that the valve arrangement closes a connection between the chamber (52) and the pressurised fluid reservoir as long as the clutch disks (26, 30) are separated from one another as a result of the pressure existing in the chamber (52).

16. Frictional disk clutch according to one of claims 13 to 15, characterised in that a connecting channel (82) between the radially outward region of the chamber (52) and the pressurised fluid reservoir contains at least one throttling restriction (88) which largely maintains constant the volume flow passing through it when the valve arrangement is open.

17. Frictional disk clutch according to one of claims 13 to 16, characterised in that the piston (46) contains at least one channel (82) leading from the chamber (52) to the outside which automatically closes upon a movement of the piston (46) against the force of the spring arrangement (54, 55).

18. Frictional disk clutch according to one of claims 13 to 17, characterised in that the clutch bell housing (34) that is provided with a generally radial opening (84) that, together with a channel (82) in the piston (46), forms a connection between the chamber (52) and a pressurised fluid reservoir and that automatically closes upon a movement of the piston (46) against the force of the spring arrangement (54, 55).

## Revendications

1. Embrayage à disques de friction commandé par un fluide sous pression pour véhicules, notamment embrayage, prévu pour le raccordement d'un essieu supplémentaire dans le train moteur, d'un véhicule agricole ou industriel, comportant un carter d'embrayage (34), à l'intérieur duquel des disques d'embrayage extérieurs (30) sont montés avec blocage en rotation et qui est monté de manière à pouvoir tourner sur un arbre (12), qui engrène avec des disques d'embrayage intérieurs (26), et comportant un piston (46), qui est déplaçable axialement au moyen d'un fluide à l'encontre de la force d'un dispositif à ressorts (54,55) et qui agit sur le bloc d'embrayage (28) constitué par les disques d'embrayage intérieurs (26) et les disques d'embrayage extérieurs (30), caractérisé en ce que le bloc d'embrayage (28), le piston (46) et le dispositif à ressorts (54,55) sont disposés à l'intérieur du carter d'embrayage (34) et forment, avec ce dernier, une unité de construction pouvant être préalablement assemblée et qui peut être emmanchée sur l'arbre (12), que le carter d'embrayage (34) enserre, avec le piston (46) et l'arbre (12), une chambre essentiellement étanche (52), qui loge le bloc d'embrayage (28) et peut être reliée à une source de fluide sous pression (66) et que l'arbre (12) est agencé, au moins dans la zone du carter d'embrayage (34), en étant étagé de façon progressive d'un côté.

2. Embrayage à disques de friction selon la revendication 1, caractérisé en ce que le piston (46) est repoussé par le dispositif à ressorts (54,55), qui prend appui sur le carter d'embrayage (34), contre le bloc d'embrayage (28) pour garantir la transmission du couple.

3. Embrayage à disques de friction selon la revendication 1 ou 2, caractérisé en ce que le bloc d'embrayage (28) est comprimé par la force du dispositif à ressorts (54,55) et est desserré par la pression du fluide sous pression.

4. Embrayage à disques de friction selon l'une des revendications 1 à 3, caractérisé en ce que le bloc d'embrayage (28) est disposé directement entre une surface radiale du carter d'embrayage (34), qui délimite la chambre (52), et une surface radiale du piston (46) déplaçable axialement par rapport au carter d'embrayage (34).

5. Embrayage à disques de friction selon l'une des revendications 1 à 4, caractérisé en ce que le dispositif à ressorts contient au moins un ressort Belleville (54,55), qui prend appui d'une part sur le côté du piston (46), qui est situé à l'extérieur de la chambre (52), et d'autre part sur une bague de retenue (56) qui est supportée par le carter d'embrayage (34).

6. Embrayage à disques de friction selon l'une des revendications 1 à 5, caractérisé en ce que sur le carter d'embrayage (34) est formé un pignon (44), qui est utilisé pour l'entraînement sur le côté entraînement et sur le côté mené.

7. Embrayage à disques de friction selon l'une des revendications 1 à 6, caractérisé en ce que le carter d'embrayage (34) et le piston (46) prennent appui sur l'arbre (12) par l'intermédiaire respectivement d'au moins un système de tourillonnage (36,38;50) sur l'arbre (12).

8. Embrayage à disques de friction selon la revendication 7, caractérisé en ce que le système de tourillonnage d'arbre (36,38) du carter d'embrayage (34) est situé au même niveau axial que le pignon (44).

9. Embrayage à disques de friction selon l'une des revendications 1 à 8, caractérisé en ce que le piston (46) est relié avec blocage en rotation au carter d'embrayage (34).

10. Embrayage à disques de friction selon la revendication 9, caractérisé en ce qu'il est prévu au moins un goujon d'assemblage axial (47), qui s'engage par l'une de ses extrémités dans un perçage frontal du carter d'embrayage (34) et par son autre extrémité dans un perçage frontal opposé du piston (46).

11. Embrayage à disques de friction selon l'une des revendications 1 à 10, caractérisé en ce que l'arbre (12) comporte au moins un perçage axial (58) et au moins un perçage d'amenée (60), qui relie la chambre (52) au perçage axial (58) et est utilisé pour amener le fluide sous pression.

12. Embrayage à disques de friction selon l'une des revendications 1 à 11, caractérisé en ce que les disques d'embrayage (26,30) possèdent des passages traversants axiaux (80) et/ou des rainures essentiellement radiales aménagées dans la surface de leur garniture.

13. Embrayage à disques de friction selon l'une des revendications 1 à 12, caractérisé en ce qu'une zone extérieure, du point de vue radial, de la chambre (52) peut être reliée à un réservoir de fluide sous pression par l'intermédiaire d'un dispositif de soupape.

14. Embrayage à disques de friction selon la revendication 13, caractérisé en ce que le dispositif de soupape est agencé et disposé de telle sorte qu'il est commandé par la pression du fluide sous pression, qui règne dans la chambre (52).

15. Embrayage à disques de friction selon la revendication 13 ou 14, caractérisé en ce que le dispositif de soupape ferme une liaison entre la chambre (52) et le réservoir de fluide sous pression dans la mesure où les disques d'embrayage (26,30) sont écartés les uns des autres en raison de la pression régnant dans la chambre (52).

16. Embrayage à disques de friction selon l'une des revendications 13 à 15, caractérisé en ce qu'un canal de liaison (82) situé entre la partie extérieure, du point de vue radial, de la chambre (52) et le réservoir de fluide sous pression contient au moins un diaphragme (88), qui, lorsque le dispositif de soupape est ouvert, maintient dans une large mesure constant le débit volumique traversant.

17. Embrayage à disques de friction selon l'une des revendications 13 à 16, caractérisé en ce que le piston (46) possède au moins un canal (82) qui part de la chambre (52) pour aboutir à l'extérieur et se ferme automatiquement dans le cas d'un déplacement du piston (46) à l'encontre de la force du dispositif à ressorts (54,55).

18. Embrayage à disques de friction selon l'une des revendications 13 à 17, caractérisé en ce que le carter d'embrayage (34) possède une ouverture essentiellement radiale (84), qui forme, avec un canal (82) situé dans le piston (46), une liaison entre la chambre (52) et un réservoir de fluide sous pression et se ferme automatiquement dans le cas d'un déplacement du piston (46) à l'encontre de la force du dispositif à ressorts (54,55).
